Europäisches Patentamt

European Patent Office

Office européen des brevets

(11) Veröffentlichungsnummer: **0 045 401**
**B1**

(12)

# EUROPÄISCHE PATENTSCHRIFT

(45) Veröffentlichungstag der Patentschrift:
08.05.85

(21) Anmeldenummer: 81105415.4

(22) Anmeldetag: 11.07.81

(51) Int. Cl.⁴: **B 60 C 23/04** // B60C23/20, G01L17/00

(54) Übertragungsverfahren für veränderliche Messwerte von Fahrzeug-Rädern.

(30) Priorität: 05.08.80 DE 3029563

(43) Veröffentlichungstag der Anmeldung:
10.02.82 Patentblatt 82/6

(45) Bekanntmachung des Hinweises auf die Patenterteilung:
08.05.85 Patentblatt 85/19

(84) Benannte Vertragsstaaten:
DE FR GB IT

(56) Entgegenhaltungen:
DE - A - 1 946 627
DE - A - 2 902 213
DE - C - 2 915 272
FR - A - 2 404 375
GB - A - 968 041
GB - A - 2 037 125
US - A - 3 694 803
US - A - 3 911 434

AVIATION WEEK & SPACE TECHNOLOGY, 7. Mai 1979,
Seiten 46,47,49,51,54, New York, U.S.A., J. MAYFIELD:
"Cockpit display of aircraft tire pressure"

(73) Patentinhaber: BAYERISCHE MOTOREN WERKE
Aktiengesellschaft, Postfach 40 02 40 Petuelring 130,
D-8000 München 40 (DE)

(72) Erfinder: Kapfhammer, Karl, Dipl.-Ing., Rosenstrasse 9,
D-8034 Germering (DE)
Erfinder: Weber, Michael, Dipl.-Phys., Feldmochinger
Strasse 37, D-8000 München 50 (DE)
Erfinder: Ramböck, Josef, Am Moosfeld 86,
D-8000 München 50 (DE)
Erfinder: Fournell, Hans Dieter, Dr.-Ing.,
Ferdinand-Kobell-Strasse 17, D-8013 Haar (DE)
Erfinder: Folger, Josef, Dipl.-Ing., Nadistrasse 22,
D-8000 München 40 (DE)
Erfinder: Hein, Hans-Rudolf, Dipl.-Ing.,
Mooswiesenstrasse 7b, D-8000 München 60 (DE)

(74) Vertreter: Bullwein, Fritz, Bayerische Motoren Werke
Aktiengeselschaft Postfach 40 02 40 -
AJ-23 Petuelring 130, D-8000 München 40 (DE)

## Beschreibung

Die Erfindung bezieht sich auf ein Übertragungsverfahren für einen veränderlichen Meßwert für den Reifendruck von Fahrzeug-Rädern, bei der von einer am Rad angeordneten Sekundärspule ein vom Ausgangssignal eines Meßwertgebers abhängiges Informationssignal auf eine fahrzeugfeste Primärspule übertragen und in einer Auswerteschaltung mit einem zugeordneten Sollwert verglichen wird.

Zu derartigen Übertragungsverfahren existieren verschiedene konstruktive Ausgestaltungen. So ist es beispielsweise aus dem Zeitschriftenartikel »Cockpit Display of Aircraft Tire Pressure«, Aviation Week & Space Technology, May 7, 1979, S. 46 bis 54 bekannt, Primär- und Sekundärspule konzentrisch anzuordnen und mittels der Primärspule wechselnder Erregung auf die Sekundärspule Energie zu übertragen und das Informationssignal von der Sekundär- auf die Primärspule als Empfangsspule zurückzuübertragen.

Aus der DE-PS 1 946 627 ist es weiter bekannt, das Informationssignal auf eine von der Primärspule unabhängige Empfangsspule rückzuübertragen.

Bei einem derartigen Übertragungsverfahren besteht, unabhängig von der konstruktiven Ausgestaltung, das grundlegende Problem, daß die Temperatur des Reifens einen erheblichen Einfluß auf den Luftdruck des Reifens besitzt. Eine Verringerung des Reifenluftdrucks infolge eines Luftverlustes kann durch eine entsprechende Erhöhung der Reifentemperatur kompensiert werden. Ein Informationssignal, das lediglich auf den Reifenluftdruck anspricht, ist daher ein nur völlig unzureichendes Maß für die tatsächlich im Reifen enthaltene Luftmenge. Zwar ist es aus der DE-OS 2 902 213 bekannt, einen mit trockenem Referenzgas gefüllten oder evakuierten kapazitiven Druckgeber zu verwenden, der zwei dem Reifenluftdruck ausgesetzte äußere Membranen in einer Membrandose enthält. Damit kann der Einfluß der Reifentemperatur auf den Reifenluftdruck jedoch nur völlig unzureichend berücksichtigt werden. Ferner ist aus der FR-A-2 404 375 eine Warnanlage bekannt, bei der der Schaltpunkt unabhängig von der Reifentemperatur eingestellt ist. Bedingt durch Bauteiletoleranzen ist der Aussagewert dieser Anzeige gering.

Der Erfindung liegt die Aufgabe zugrunde, ein Übertragungsverfahren der eingangs genannten Art zu schaffen, mit dem eine präzise Berücksichtigung des Einflusses der Reifentemperatur auf das Informationssignal erreicht wird.

Die Erfindung löst diese Aufgabe dadurch, daß das Informationssignal entweder stets unabhängig von der Temperatur des Reifens ist und der zugeordnete Sollwert entsprechend der Umgebungstemperatur verändert ist oder bei von der Umgebungstemperatur unabhängigem konstantem Sollwert erst über einer vorgegebenen Grenztemperatur ($\vartheta_N$) unabhängig und unter dieser Grenztemperatur abhängig von der Temperatur des Reifens ist.

Die erste Alternative beruht auf der Überlegung, daß eine »innere« Temperaturerhöhung des Reifens infolge der Walkarbeit von der »äußeren« Temperaturänderung, die durch die Umgebungstemperatur gegeben ist, unterschieden werden soll. Ein Informationssignal, das stets temperaturkompensiert ist, zeigt nämlich bei sämtlichen Temperaturen den gleichen Wert an und entspricht in der Regel nicht dem tatsächlichen Reifendruck. Sofern die im Reifen herrschende Temperatur niedriger wird als beim Fülldruck-Einstellen, kann der Reifendruck unter den erforderlichen Mindestwert sinken. Dieser Betriebsfall wird durch Berücksichtigung der Umgebungstemperatur erfaßt. Diese kann mittels eines im Fahrzeug angeordneten Temperaturgebers bestimmt und der Auswerteschaltung zugeführt werden.

Die zweite Alternative stellt eine Näherung des ersten Verfahrens dar. Dabei wird die Umgebungstemperatur nicht berücksichtigt. Sofern die Reifentemperatur größer oder gleich der Grenztemperatur ist, geht eine mit der Reifentemperatur verbundene Erhöhung des Reifendrucks nicht in das Informationssignal ein. Eine Druckerniedrigung infolge einer Verringerung der Befüllung hingegen wird erfaßt. Bei geeigneter Wahl der Grenztemperatur von etwa 300 K läßt sich erreichen, daß ein Unterschreiten eines kritischen Druckwerts infolge einer niedrigen, unter dieser Grenztemperatur liegenden Reifentemperatur sowie selbstverständlich ein Druckabfall infolge eines Lecks unabhängig von der Reifentemperatur erfaßt werden kann.

Für die beiden Alternativen besteht eine Weiterbildung darin, daß der Sollwert entsprechend dem Beladungszustand des Fahrzeugs und/oder dem atmosphärischen Luftdruck verändert wird. Diese beiden Parameter können durch im Fahrzeug angeordnete Geber bestimmt und der Auswerteschaltung zugeführt werden. Damit kann der Sollwert auch den äußeren Bedingungen angepaßt werden.

Die Erfindung ist anhand der Zeichnung näher erläutert. Es zeigt

Fig. 1 schematisch einen schaltungstechnischen Aufbau zur Durchführung eines Verfahrens zur Druckbestimmung von Fahrzeug-Rädern,

Fig. 2 und 4 Teile der Schaltung von Fig. 1 im einzelnen und

Fig. 3 und 5 Diagramme, anhand deren die Funktion eines für das Verfahren verwendeten Druckaufnehmers erläutert wird.

Für ein Verfahren zur Bestimmung des Reifendrucks von Fahrzeugen sind fahrzeugfest ein an einer Konstant-Spannungsquelle angeschlossener Zerhacker 1 und eine Primärspule 2 angeordnet. Diese sitzt beispielsweise am Bremsenschutzblech eines Rades und besitzt eine zur Radachse parallele Achse. An den beiden Zuführungsleitungen 3 der Primärspule ist eine Auswerteschaltung 4 angeschlossen, der eine nicht dargestellte Anzeigevorrichtung nachgeschaltet ist.

Auf dem Fahrzeugrad ist konzentrisch zur Radachse eine Sekundärspule 5 befestigt, der eine Gleichrichterstufe 6, ein Kondensator 7, ein Schwellwertschalter 8 und ein Druck/Frequenz-Wandler 9 nachgeschaltet sind. Der Wandler 9 ist mit dem Reifendruck beaufschlagt. Primärspule 2 und Sekundärspule 5 besitzen gleiche Windungszahl.

Der Zerhacker 1 schließt die Primärspule 2 getaktet an der als Konstant-Spannungsquelle dienenden Bordnetzbatterie an. Wie bei einem Transformator (bei niedrigen Freqenzen) bzw. einer Sende-Empfangs-Einrichtung wird die Sekundärspule 5 erregt und damit der Sekundärseite Energie zugeführt. Die durch die Gleichrichterstufe 6 auf einen für den Wandler 9 erforderlichen Wert angehobene Ausgangsspannung der Sekundärspule 5 lädt den Kondensator 7. Bei einem vorgegebenen Ladungszustand des Kondensators 7 verbindet der Schwellwertschalter diesen mit dem Druck/Frequenz-Wandler 9.

Das Ausgangssignal des Druck/Frequenz-Wandlers 9 besitzt eine vom Reifendruck abhängige Frequenz von beispielsweise 5 bis 10 kHz und beträgt ein mehrfaches der Frequenz des Zerhackers 1. Über einen Kopplungskondensator 10 wird es auf die Sekundärspule 5 geführt und als Informationssignal von der Primärspule 2 empfangen. Infolge seiner höheren Frequenz kann es ohne weiteres durch einen Hochpaß 11 für die Auswerteschaltung 4 ausgefiltert werden.

Solange der Schwellwertschalter 8 den Kondensator 7 mit dem Druck/Frequenz-Wandler 9 verbindet und dieser somit gespeist wird, unterbricht die Auswerteschaltung 4 den Zerhacker 1. Dadurch wird während der Rückübertragung des Informationssignals keine Energie von der Primärspule 2 auf die Sekundärspule 5 übertragen und damit eine Trennung zwischen den beiden Übertragungswegen durchgeführt.

Sofern eine einmalige impulsförmige Erregung der Primärspule ausreicht, den Kondensator 7 über den Schwellwert aufzuladen, ist eine derartige Unterbrechung des Zerhackers 1 nicht erforderlich, da die Rückübertragung des Informationssignals in den Erregungspausen zwischen zwei in gleichen zeitlichen Abstand aufeinander folgenden Erregungsimpulsen erfolgen kann.

In gleicher Weise können für sämtliche Räder des Fahrzeugs die Reifendruckwerte bestimmt werden. Hierzu ist zwischen dem Zerhacker und der Primärspule ein Multiplexer 12 angeordnet, der in gleicher Weise, wie für das eine Rad beschrieben, an den anderen Rädern angeordnete Primärspulen nacheinander an der Bordnetzbatterie anschaltet. Diesen Primärspulen sind sekundärseitig, d. h. in den Rädern die gleichen Teile, wie dargestellt, zugeordnet.

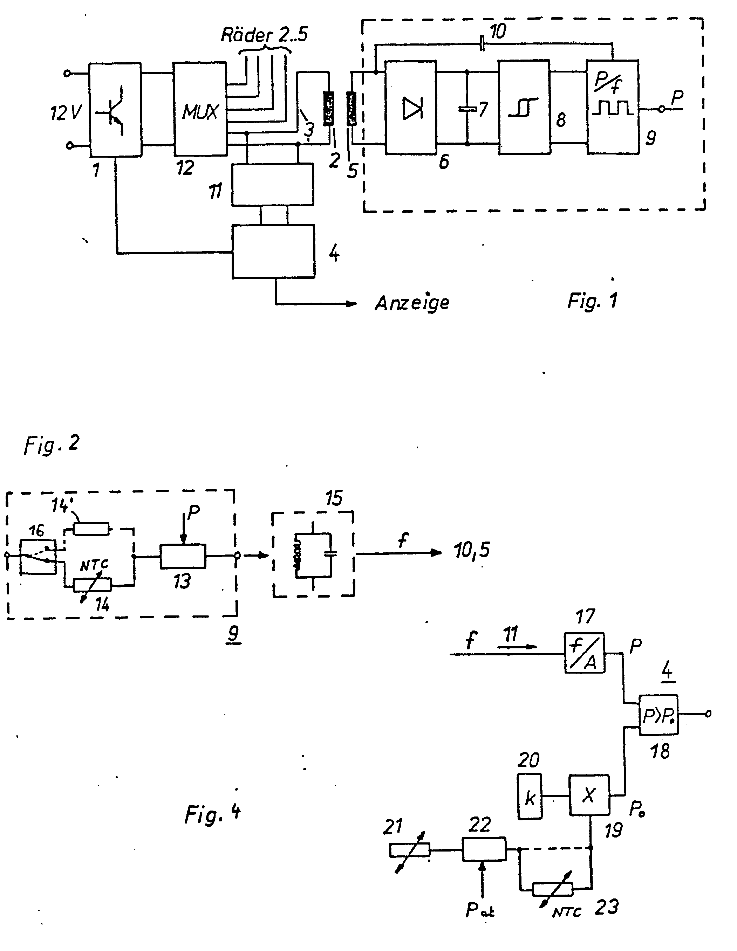

Der Aufbau des Druck/Frequenz-Wandlers 9 von Fig. 1 ist schematisch in Fig. 2 gezeigt. Der Reifendruck wirkt auf einen druckempfindlichen Widerstand 13 ein, dessen Widerstandswert sich entsprechend dem Reifendruck ändert. Damit in Reihe geschaltet ist ein NTC-Widerstand 14, dessen Widerstandswert sich entsprechend der Temperatur des Reifens ändert. Durch entsprechende Wahl der Kennlinien der Widerstände 13 und 14 wird die Summe ihrer Widerstandswerte von der Temperatur des Reifens unabhängig. Dies läßt sich dadurch erreichen, daß bei einer beliebigen Temperaturdifferenz die Änderung des Widerstands 14 umgekehrt gleich der Änderung des Widerstands 13 ist.

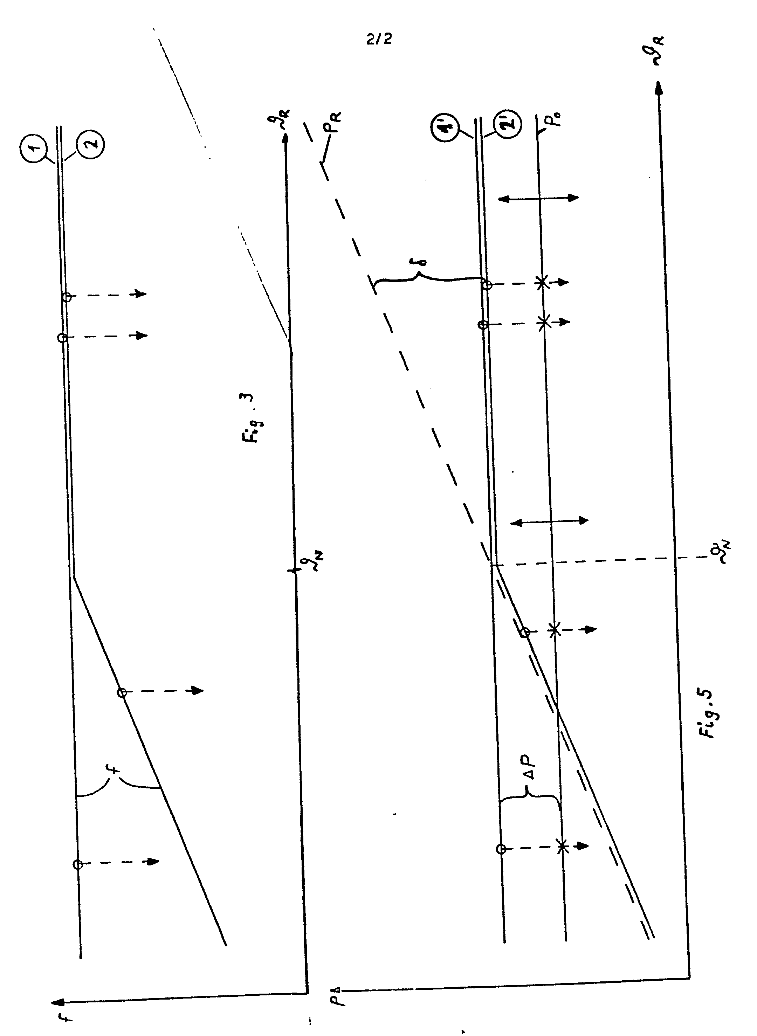

Die Reihenschaltung der Widerstände 13 und 14 wirkt als Stellgröße auf einen schematisch dargestellten Schwingkreis 15 ein, dessen Frequenz entsprechend dieser Stellgröße verändert wird. Ist diese Stellgröße stets temperaturkompensiert, so ist auch die Frequenz f des Schwingkreises 15 unabhängig von der Temperatur des Reifens und für verschiedene Reifen bei gleichen Reifentemperaturen lediglich abhängig vom Reifendruck. Ein derartiger Zusammenhang stellt sich in dem in Fig. 3 gezeigten Diagramm für die Abhängigkeit der Frequenz f von der Reifentemperatur $\vartheta_R$ als waagerechte Gerade ① dar. Bei gleichbleibender Temperatur und Absinken des Reifendrucks verändert sich die Frequenz f. Abhängig von der Charakteristik des Druck/Frequenz-Wandlers 9 vergrößert sie sich oder, wie durch strichlierte Pfeile dargestellt, verringert sie sich.

Ein anormaler, d. h. ein zu niedriger Reifendruck läßt sich dann unter Berücksichtigung der Umgebungstemperatur, des Beladungszustands des Fahrzeugs und des atmosphärischen Luftdrucks mit Hilfe der Auswerteschaltung 4 feststellen.

Die in Fig. 4 gezeigte Auswerteschaltung besteht aus einem Frequenz-/Analog-Wandler 17, dem das Ausgangssignal des Hochpasses 11 zugeführt ist und der mit einem Komparator 18 verbunden ist. Dieser ist ferner mit einem Multiplizierer 19 verbunden, der eine in einem Speicher 20 vorliegende Druckkonstante k mit einem Faktor multipliziert. Dieser Faktor ist entsprechend der Umgebungstemperatur, dem Beladungszustand des Fahrzeugs und dem atmosphärischen Luftdruck gebildet. Ein von der Umgebungstemperatur abhängiger Faktor wird durch einen der Umgebungstemperatur ausgesetzten, temperaturempfindlichen Widerstand 23 gegeben. Ein derartiger Widerstand kann beispielsweise ein NTC-Widerstand entsprechend dem Widerstand 14 sein. Der Beladungszustand wird mit Hilfe eines als verstellbarer Widerstand 21 ausgebildeten, in der Regel an der Hinterachse des Fahrzeugs angeordneten Gebers bestimmt. Ein dem atmosphärischen Luftdruck proportionales Ausgangssignal liefert ein druckempfindlicher Widerstand 22, der dem äußeren Luftdruck ausgesetzt ist. Ein derartiger Widerstand findet beispielsweise im Rahmen von elektronischen Zündanlagen Verwendung. Die Widerstände 21, 22 und 23 sind in Reihe geschaltet und liefern den genannten Faktor als analogen Eingangswert für den Multiplizierer 19. Ihre Kennlinien sind derart gewählt, daß sie eine der Umgebungstemperatur, dem Beladungszustand und dem atmosphärischen Luftdruck möglichst genau angepaßte Änderung des Reifendruck-Sollwerts $p_0$ zur Folge haben. Der Sollwert $p_0$ ist durch den Multiplizierer 19 aus seinen beiden Eingangsgrößen, der Druckkonstanten k und dem umgebungstemperatur-, beladungs- und atmosphärendruckabhängigen Faktor gebildet. Sofern der Reifendruck $p_R$ kleiner als der Sollwert $p_0$ ist, löst der Komparator 18 eine nicht dargestellte Warnanzeige, beispielsweise in Form einer Warnlampe, aus.

Auf die Messung der Umgebungstemperatur wird bei einem Näherungsverfahren verzichtet. Bei diesem ist die Frequenz des als Druckgeber dienenden Druck/Frequenz-Wandlers 9 erst oberhalb einer vorgegebenen Grenztemperatur $\vartheta_N$ temperaturkompensiert. Die Grenztemperatur liegt im Bereich der tatsächlichen Betriebstemperaturen des Reifens und besitzt einen Wert von z. B. 300 K. Für dieses Verfahren ist statt des NTC-Widerstands 14 in Fig. 2 durch einen temperaturabhängigen Umschalter 16 ein Abgleichswiderstand 14' eingeschaltet, dessen konstanter, temperaturabhängiger Wert gleich dem Wert des NTC-Widerstands 14 bei Grenztemperatur ist.

Unterhalb der Grenztemperatur $\vartheta_N$ wirken auf den Schwingkreis 15 die Widerstände 13 und 14' und über der Grenztemperatur die Widerstände 13 und 14 als Stellgröße ein. Die Kennlinie eines derartigen Gebers ist in Fig. 3 als Kurve ② dargestellt. Unter der Voraussetzung einer gleichbleibenden Luftmenge im Reifen ist die Frequenz f des Wandlers 9 für Reifentemperaturen unter der Grenztemperatur $\vartheta_N$ abhängig von der Reifentemperatur, beispielsweise linear steigend, und für Reifentemperaturen über der Grenztemperatur temperaturunabhängig konstant.

Bei diesem Näherungsverfahren ist in der in Fig. 4 gezeigten Auswerteschaltung 4 der umgebungstemperaturabhängige Widerstand 23, wie strichliert gezeigt, kurzgeschlossen. Der in dem Multiplizierer 19 eingehende Faktor ist dann nur noch durch die Reihenschaltung der Widerstände 21 und 22 bestimmt und somit lediglich vom Beladungszustand und dem atmosphärischen Luftdruck abhängig.

Die Wirkungsweise des Gebers 9 in Verbindung mit der Auswerteschaltung 4 ist anhand des in Fig. 5 dargestellten Diagramms erläutert.

In diesem Diagramm ist der Verlauf des tatsächlichen Reifendrucks $P_R$ als strichlierte Gerade eingezeichnet. Dem in Fig. 3 dargestellten vollständig (Kurve ① ) bzw. teilweise (Kurve ② ) (Reifen-)temperaturkompensierten Ausgangssignal des Wandlers 9 (Frequenz f) entspricht ein Reifendruck p, der im ersten Fall ein temperaturunabhängiger konstanter Wert ist und der im zweiten Fall für Werte der Reifentemperatur unterhalb der Grenztemperatur $\vartheta_N$ gleich dem tatsächlichen Reifendruck und für Werte über der Grenztemperatur konstant ist. Der Verlauf der in beiden Fällen auf die Primärseite übertragenen Druckwerte ist durch die Kurven ① und ② dargestellt.

Parallel zur Geraden 1' verläuft eine mit $p_0$ bezeichnete Gerade, die durch den in der Auswerteschaltung 4 bestimmten Sollwert gegeben ist. Der Abstand $\Delta p$ dieser Geraden $p_0$ von der Kurve ① ist entsprechend den Sicherheitsanforderungen gewählt. Ein Grundwert des Solldrucks kommt durch die Druckkonstante k, die im Speicher 20 (Fig. 4) enthalten ist, zum Ausdruck. Gegenüber diesem Grundwert ergeben die Widerstände 21, 22 und, da im Falle der vollständig temperaturkompensierten Kurve ① eine Berücksichtigung der Umgebungstemperatur erfolgt, auch der Widerstand 23 eine Parallelverschiebung der Kurve $p_0$. Eine Vergrößerung (Verkleinerung) des Beladungszustands und des atmosphärischen Luftdrucks hat eine Parallelverschiebung nach oben (unten), eine Vergrößerung (Verkleinerung) der Umgebungstemperatur hingegen eine Parallelverschiebung nach unten (oben) zur Folge.

Durch diese Lage der Geraden $p_0$ wird im Falle des übertragenen Reifendruck-Informationssignals entsprechend der Geraden ① erreicht, daß unabhängig von der tatsächlichen Reifentemperatur eine Warnanzeige stets beim selben Druckverlust $\Delta p$ ausgelöst wird. Dieser Druckverlust ist gleich dem Abstand der Geraden ① und $p_0$. Durch die Parallelität dieser beiden Geraden kann der für die Warnanzeige maßgebende Druckverlust relativ klein gehalten sein. Ein realistisches Maß hierfür ist beispielsweise 0,1 bar. Gerade bei hohen Reifentemperaturen ergibt sich damit die Möglichkeit, bereits bei einem derart geringen und in Anbetracht des bei derartigen Temperaturen erhöhten Reifendrucks optisch nicht feststellbaren Druckverlust die Warnanzeige auszulösen. Da hohe Reifentemperaturen gerade bei Autobahn-Fahrten mit hoher Geschwindigkeit auftreten, ergibt sich damit eine erhebliche Erhöhung der Verkehrssicherheit. Auch bei einem Anstieg der Reifentemperatur und der damit verbundenen Erhöhung des Reifendrucks wird die Warnanzeige frühzeitig ausgelöst, sofern ein Luftverlust und daraus resultierend ein Druckverlust von 0,1 bar auftritt. Andererseits wird durch Berücksichtigung der Umgebungstemperatur erreicht, daß die Warnanzeige auch bei Unterschreiten eines für die Betriebssicherheit des Reifens notwendigen Minimaldrucks ausgelöst wird. In der Auswerteschaltung 4 wird hierzu bei Absinken der Umgebungstemperatur auf einen Wert von z. B. 280 K die Gerade $p_0$ des Sollwerts über die Kurve ① angehoben und die Warnanzeige ausgelöst.

Auch im Falle der »geknickten« Kennlinie des Wandlers 9 entsprechend der Kurve ② erfolgt die Warnanzeige, wenn das übertragene Drucksignal unter dem Sollwert $p_0$ liegt. Dieser ist unabhängig von der Reifentemperatur und lediglich in Abhängigkeit von der Beladung (Widerstand 21) und dem atmosphärischen Luftdruck (Widerstand 22) verändert. Ist die Reifentemperatur unterhalb der Grenztemperatur, so erfolgt

die Warnanzeige bei einem Druckverlust, der gleich der Differenz aus dem tatsächlichen Reifendruck und dem Sollwert $p_0$ ist. Ist die Reifentemperatur jedoch größer als die Grenztemperatur; so erfolgt die Warnanzeige bei einem Druckverlust, der — unabhängig von der tatsächlichen Reifentemperatur — gleich der Differenz aus dem Reifendruck bei Grenztemperatur und dem Sollwert $p_0$ ist. Diese Differenz ist kleiner als die Differenz des tatsächlichen Reifendrucks und des Sollwerts $p_0$. Für eine angenommene Reifentemperatur größer als die Grenztemperatur $\vartheta_N$ ist diese Verkleinerung $\delta$ der Differenz grafisch wiedergegeben.

Wie zu erkennen, ist dieser Wert $\delta$ um so größer, je weiter die Reifentemperatur über der Grenztemperatur liegt. Da hohe Reifentemperaturen gerade bei hohen Belastungen des Reifens auftreten, wird der Fahrer wesentlich früher auf einen Druckverlust aufmerksam gemacht, als bei einer Warnanzeige, die unabhängig von der tatsächlichen Reifentemperatur bei einem fest vorgegebenen Reifendruck anspricht. Wie bei dem exakten, durch die Geraden ① und ⑦ dargestellten Verfahren wird auch hier ein Unterschreiten eines Minimaldrucks festgestellt. Unterhalb der Grenztemperatur entspricht das übertragene Informationssignal exakt dem tatsächlichen Reifendruck. Die Warnanzeige wird dann ausgelöst, wenn der Reifendruck entsprechend der Kurve ⑦ unter den Sollwert $p_0$ absinkt.

Der Übersichtlichkeit halber wurde der Sollwert $p_0$ für beide Kennlinien ① und ② gleich gewählt. Der im Falle des exakten Verfahrens entsprechend den Geraden bzw. ① maßgebende und durch den NTC-Widerstand 23 gegebene zusätzliche Einfluß der Umgebungstemperatur kommt in Fig. 5 nicht zum Ausdruck. Er hätte, abhängig vom gewählten Maßstab, eine Parallelverschiebung der Geraden $p_0$ gegenüber dem dargestellten, sich auf das Näherungsverfahren beziehenden Verlauf zur Folge.

Die Anwendung der beiden Verfahren zur Übertragung eines zumindest teilweise (Reifen)temperaturkompensierten Meßsignals ist nicht auf die Anordnung mit fahrzeug- und radseitig jeweils nur einer Spule (2,5) beschränkt. Ebenso kann anstelle eines beladungszustands-, atmosphärenluft- und — im Fall des exakten Verfahrens — umgebungstemperaturabhängig veränderten Sollwertes $p_0$ das Meßsignal selbst in entsprechender Weise verändert und mit einem unveränderlichen Sollwert verglichen werden.

**Patentansprüche**

1. Übertragungsverfahren für einen veränderlichen Meßwert für den Reifendruck von Fahrzeug-Rädern, bei der von einer am Rad angeordneten Sekundärspule ein vom Ausgangssignal eines Meßwertgebers abhängiges Informationssignal auf eine fahrzeugfeste Primärspule (2) übertragen und in einer Auswerteschaltung (4) mit einem zugeordneten Sollwert verglichen wird, dadurch gekennzeichnet, daß das Informationssignal entweder stets unabhängig von der Temperatur des Reifens ist und der zugeordnete Sollwert entsprechend der Umgebungstemperatur verändert ist oder bei von der Umgebungstemperatur unabhängigem konstantem Sollwert erst über einer vorgegebenen Grenztemperatur $(\vartheta_N)$ unabhängig und unter dieser Grenztemperatur abhängig von der Temperatur des Reifens ist.

2. Übertragungsverfahren nach Anspruch 1, dadurch gekennzeichnet, daß der Sollwert entsprechend dem Beladungszustand des Fahrzeugs und/oder dem atmosphärischen Luftdruck verändert ist.

**Claims**

1. A method of transmitting a variable measured value of the tyre-pressure of vehicle wheels, wherein, an information signal, dependent upon the output signal of a measured-value transmitter, is transmitted from a secondary coil arranged on a wheel to a primary coil (2) attached to the vehicle and is compared in an analysing circuit (4) with a corresponding required value, characterised in that the information signal is either continuously independent of the temperature of the tyre and the corresponding required value is varied according to the surrounding temperature, or, in the case of a constant required value independent of the surrounding temperature, is varied independently of the temperature of the tyre only above a predetermined limiting temperature $(\vartheta_N)$ and is varied in dependence upon the temperature of the tyre only below this limiting temperatur.

2. A method according to Claim 1, characterised in that the required value is varied in accordance with the load conditions of the vehicle and/ or with the atmospheric air pressure.

**Revendications**

1. Procédé de transmission d'une valeur de mesure variable pour la pression des pneumatiques de roues de véhicule, procédé dans lequel, à partir d'une bobine secondaire disposée sur la roue, un signal d'information dépendant du signal de sortie d'un indicateur de valeur de mesure, est transmis à une bobine primaire (2) fixe sur le véhicule et est comparé dans un circuit d'exploitation (7) avec une valeur de consigne associée, procédé, caractérisé en ce que le signal d'information ou bien est en permanence indépendant de la température du pneumatique, tandis que la valeur de consigne qui lui est associée est modifiée de façon correspondante à la température environnante, ou bien ce signal d'information, pour une valeur de consigne constante indépendante de la température environnante, n'est indépendant de la température du pneu au-dessus d'une température limite prédéfinie $(\vartheta_N)$ tandis qu'il en dépend au-dessous de cette température limite.

2. Procédé de transmission selon la revendication 1, caractérisé en ce que la valeur de consigne est modifiée en fonction de l'état de charge du véhicule et/ou de la pression de l'air atmosphérique.

Fig. 1

Fig. 2

Fig. 4

0 045 401

$f$

①
②

$f$

$\vartheta_R$

$\vartheta_N$

Fig. 3

$P$

$P_R$

$\delta$

④'

②'

$\Delta P$

$P_0$

$\vartheta_R$

$\vartheta_N$

Fig. 5